# EUROPÄISCHE PATENTSCHRIFT

(11) **EP 1 542 886 B1**
(45) Veröffentlichungstag und Bekanntmachung des Hinweises auf die Patenterteilung: **31.05.2006**
(21) Anmeldenummer: 03711834.6
(22) Anmeldetag: 26.02.2003
(51) Int. Cl.: B60R 21/01

(54) **VERFAHREN ZUR ERKENNUNG EINES AUFPRALLS**
METHOD FOR THE DETECTION OF AN IMPACT
PROCEDE DE DETECTION D'UN IMPACT LATERAL

(30) Priorität: 19.09.2002 DE 10243514
(43) Veröffentlichungstag der Anmeldung: 22.06.2005
(73) Patentinhaber: ROBERT BOSCH GMBH, 70442 Stuttgart (DE)
(72) Erfinder: RECKNAGEL, Rolf-Juergen, 07747 Jena (DE)
(86) Internationale Anmeldenummer: PCT/DE2003/000614
(87) Internationale Veröffentlichungsnummer: WO 2004/028866

(56) Entgegenhaltungen:
- DE-A- 19 830 835
- DE-C- 10 057 258
- DE-C- 19 619 468
- US-A- 5 748 075

## Beschreibung

### Stand der Technik

Die Erfindung geht aus von einem Verfahren zur Erkennung eines Aufpralls nach der Gattung des unabhängigen Patentanspruchs.

Aus DE 100 57 258 C1, das die Merkmale des Oberbegriffs des unabhängigen Anspruchs 1 zeigt, ist ein Verfahren zur Seitenaufprallerkennung mittels eines Temperatursensors bekannt, der eine adiabatische Temperaturerhöhung bei einer Verformung eines Seitenteils eines Fahrzeugs misst. Dabei wird die absolute Temperaturerhöhung und der Temperaturgradient ermittelt. Diese werden mit vorgegebenen Schwellwerten verglichen, um festzustellen, ob es sich um einen Seitenaufprall handelt oder nicht. Nur, wenn beide Schwellwerte übertroffen werden, dann liegt ein Seitenaufprall vor, wobei eine Plausibilisierung mit einem Beschleunigungssensor durchgeführt wird. In Abhängigkeit von der Plausibilisierung und dem Aufprallsignal werden gegebenenfalls Rückhaltemittel angesteuert.

Aus EP 667 822 B1 ist ein Drucksensor bekannt, der einen adiabatischen Druckanstieg in einem weitgehend geschlossenen Seitenteil der Fahrzeugkarosserie als Auswerteparameter für einen Aufprall erkennt. Auch hier ist ein Plausibilitätssensor vorgesehen. Dabei kann eine Filterung des Signals unterhalb von einem Kilohertz vorgesehen sein.

Aus DE 198 30 835 C2 ist ein Verfahren zum Auslösen eines Rückhaltemittels bekannt, wobei eine Sensoreinrichtung ein Drucksignal liefert. Der Algorithmus, der den Aufprall erkennt, verwendet einen veränderlichen Schwellwert, der von der Änderung des Drucksignals abhängt.

Aus DE 196 19 468 C1 ist ein Verfahren zum Auslösen eines Rückhaltemittels zum Seitenaufprallschutz an einem Fahrzeug bekannt, bei dem in Abhängigkeit von einem Mittelwertsignal des Drucksignals und einer Steigerung des Drucksignals die Auslösung eines Rückhaltemittels vorgenommen wird.

Nachteilig an den im Stand der Technik vorgeschlagenen Algorithmen zur Auswertung von Druck- bzw. Temperatursignalen ist, dass es einige Nichtauslösefälle gibt, die schwer von echten Crashes zu unterscheiden sind. Besonders das Auftreffen eines Fußballs, Fußtritte, Fahrradaufpralle oder wenigstens sehr heftiges Türschlagen erzeugen Druck- bzw. Temperatursignale, die generell sehr schwer von Pfahlaufprallen mit niedriger Geschwindigkeit zu trennen sind.

### Vorteile der Erfindung

Das erfindungsgemäße Verfahren zur Erkennung eines Aufpralls mit den Merkmalen des unabhängigen Patentanspruchs hat demgegenüber den Vorteil, dass das Druck- bzw. Temperatursignal zunächst einer Tiefpassfilterung bei ca. 400 Hz unterzogen wird, da sich die crashrelevanten Daten im Druck- bzw. Temperatursignals im tieffrequenten Anteil des Signals befinden. Die Tiefpassfilterung ist weiterhin unabdingbar, um die Empfindlichkeit der Ableitung des Signals auf die Skalierung der interessierenden Signaleigenschaften abzustimmen. Insbesondere der erste Vergleich legt die Empfindlichkeit des Algorithmus fest. Die Schwelle ist so eingestellt, dass ein Überschreiten des Betrags der Schwelle in positive als auch in negative Richtung zu einem Start des Algorithmus mit weiteren Vergleichen führt. Die übrigen Vergleiche können nun verschiedenartig sein, wobei der einfachste Vergleich das Druck- oder Temperatursignal selbst ist. Dies wird beispielsweise zur einer Auslösung oder zu einer Erkennung eines Aufpralls führen, wenn es sich um einen schnellen Crash mit einem harten Gegner oder auch um einen schrägen Crash, bei dem die Tür erst spät getroffen wird, handelt. Verwendet man die Druckänderung oder Temperaturänderung, werden damit schnelle Pfahlcrashes, also Crashes, die relativ ungehindert nur lokal in das Fahrzeug eindringen, erkannt. In einem dritten Pfad ist vorgesehen, ein Produkt aus erster und verzögerter zweiter Ableitung mit einer Schwelle zu vergleichen. Beide, die erste und die zweite Ableitung, müssen größer als Null sein. Ziel dieses Pfades ist es, eine große positive Krümmung, gefolgt von einem starken Anstieg zu detektierten. Eine Möglichkeit ist die dargestellte Variante, andere sind denkbar.

Durch die Kombination eines Tiefpassfilters und der einfachen bzw. zweifachen Anwendung eines Ableitungsoperators entstehen sogenannte Waveletfilterungen mit ein bzw. zwei verschwindenden Momenten. Grob gesprochen detektiert ein Wavelet mit einem verschwindenden Moment Änderungen des Signals mit einer bestimmten Skalierung, während ein Wavelet mit zwei verschwindenden Momenten eher Krümmungen des Signals detektiert. Ein solcher Signalverlauf, positive Krümmung, gefolgt von großem Anstieg, tritt auf, wenn das eindringende Objekt auf steifere Strukturen trifft, zum Beispiel auf eine B-Säule oder ein Versteifungsrohr und dadurch die Intrusion, also das Eindringen in das Fahrzeug, etwas abgebremst wird. Wenn die entsprechende Struktur dann nachgibt, dringt das Objekt umso schneller ein. Dieser Effekt kann auch durch eine Deformation des eindringenden Objekts, hier eine weiche Barriere, verursacht werden. Bei sogenannten Misuses, also Fehlauslösungen, durch Fußball, Fußtritt oder Fahrrad, treten solche Effekte weit weniger auf, so dass damit ein sehr gutes Kriterium zur Trennung von kritischen Missuses und zum Beispiel langsamen Pfahlcrashes und weichen Barrierencrashes gegeben ist. Die Trennung von Misuses und Auslösecrashes muss über den Algorithmus erfolgen, da auch Plausibilitätssensoren bei den sogenannten Misuses freigeben würden. Nachdem also die Empfindlichkeitsüberprüfung dazu geführt hat, dass die Schwelle der Empfindlichkeit überschritten wurde, muss nur einer dieser Pfade auslösen. D.h. entweder das Signal an sich, die erste, oder die zweite Ableitung multipliziert mit der ersten Ableitung.

Durch die in den abhängigen Ansprüchen aufgeführten Maßnahmen und Weiterbildungen sind vorteilhafte Verbesserungen des im unabhängigen Anspruch angegebenen Verfahrens zur Erkennung eines Aufpralls möglich.

Besonders vorteilhaft ist, dass die erste oder wenigstens die eine zweite Schwelle im zeitlichen Verlauf angepasst werden. D.h. in Abhängigkeit vom Druck- oder Temperatursignal oder deren Ableitungen können die Schwellen angepasst werden, um entsprechend auf bestimmte Situationen reagieren zu können. Wird beispielsweise eine Situation erkannt, die zu einem Druck- oder Temperaturanstieg führt und damit eine Fehlauslösung nach sich ziehen würde, ist es möglich, in einem solchen Fall die Schwellen für eine gewisse Zeit anzuheben, um sie danach wieder abzusenken. Das erfindungsgemäße Verfahren ist insbesondere zur Erkennung eines Seitenaufpralls geeignet. Wird das erfindungsgemäße Verfahren zur Seitenaufpralldetektion verwendet, kann auf die Empfindlichkeit gegebenenfalls ein Frontaufprallsignal Einfluss nehmen. Damit kann nämlich bei einem Aufprall verhindert werden, dass ein Frontalaufprall ungewollt zur Auslösung von Seitenschutzvorrichtungen führt.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild einer Vorrichtung, die das erfindungsgemäße Verfahren verwendet,
- Figur 2: ein Blockdiagramm des erfindungsgemäßen Verfahrens für die Auswertung von Drucksensoren,
- Figur 3: ein Blockdiagramm des erfindungsgemäßen Verfahrens zur Auswertung von Temperatursignalen und
- Figur 4: einen typischen Signalverlauf.

### Beschreibung

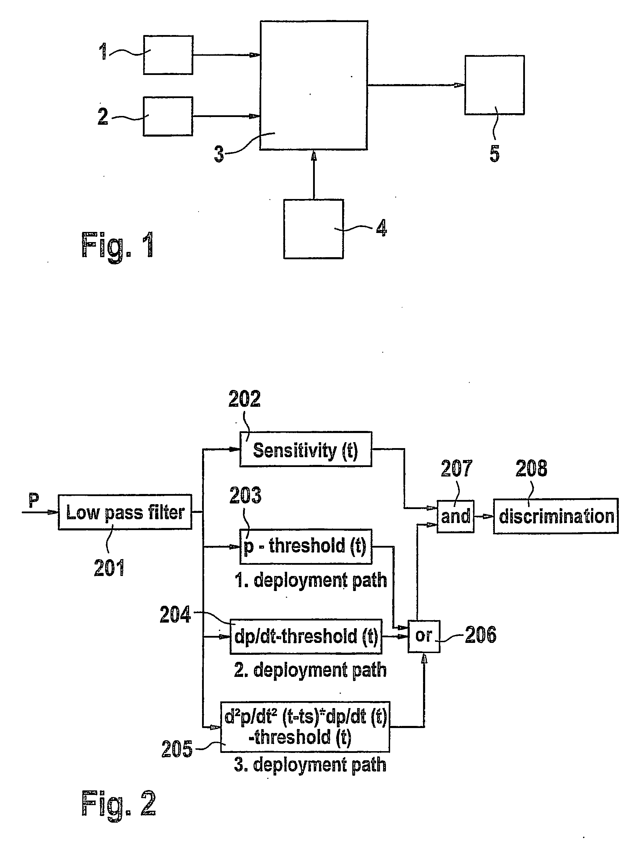

Figur 1 zeigt in einem Blockschaltbild eine Vorrichtung, auf der das erfindungsgemäße Verfahren abläuft. Zwei Aufprallsensoren 1 und 2, die die adiabatische Zustandsänderung auswerten, sind jeweils am Steuergerät 3 angeschlossen. Weiterhin ist an das Steuergerät 3 über einen dritten Dateneingang ein Plausibilitätssensor 4 angeschlossen. Über einen Datenausgang ist das Steuergerät 3 mit einem Rückhaltesystem verbunden. Optional kann das Steuergerät 3 auch mit einer Insassenklassifizierung verbunden sein, so dass nur die Rückhaltemittel ausgelöst werden, die für die jeweiligen Insassen geeignet sind.

Die Aufprallsensoren 1 und 2, die ein Signal in Abhängigkeit von der adiabatischen Zustandsänderung in einem Fahrzeugteil liefern, sind entweder Drucksensoren oder Temperatursensoren. Dabei sind diese Sensoren in einem Fahrzeugteil angeordnet, das zum größten Teil geschlossen ist, so dass es zu einem adiabatischen Druckanstieg bei einer Verformung des Fahrzeugteils kommen kann. Diese Art der Aufprallsensierung ist äußerst schnell und beispielsweise den Signalen von Beschleunigungssensoren überlegen. Die Sensoren 1 und 2 weisen eine Signalaufbereitung, einen Analog-Digital-Wandler und einen Senderbaustein auf, der die Signale zum Steuergerät 3 überträgt. Die Sensoren 1 und 2 sind nämlich ausgelagert von Steuergerät 3 auf Grund ihrer Funktion angeordnet. Wirken die beiden Sensoren 1 und 2 als Seitenaufprallsensoren, dann sind sie in Seitenteilen des Fahrzeugs angeordnet, beispielsweise der Türe. Anstatt zwei Seitenaufprallsensoren ist es auch möglich, mehr zu verwenden, beispielsweise für jedes Seitenteil also vier. Zusätzlich können noch für Heck und Frontaufprall solche Sensoren verbaut werden. Die Sensorsignale werden dann im Steuergerät 3 ausgewertet, das dazu einen Prozessor aufweist. Um aber die Rückhaltemittel 5, beispielsweise Airbags oder Gurtstraffer, auszulösen, müssen die Signale der Sensoren 1 und 2 durch einen weiteren Sensor 4 plausibilisiert werden. Hier wird dazu ein Beschleunigungssensor verwendet. Alternativ ist es möglich, einen Körperschallsensor oder auch eine Umfeldsensorik dafür zu verwenden. Auch der Sensor 4 weist eine Signalaufbereitung, einen Analog-Digital-Wandler und einen Senderbaustein auf, um seine Mess-Signale an das Steuergerät 3 zu übertragen. Die Sensoren 1, 2 und 4 können jeweils mikromechanisch ausgeführt sein, weil dies eine Fertigungstechnik ist, die die Produktion in hohen Stückzahlen mit hoher Genauigkeit ermöglicht. Es ist möglich, dass der Sensor 4 im Steuergerät 3, und zwar im gleichen Gehäuse, angeordnet ist. Die ausgelagerten Sensoren 1, 2 und 4 sind hier über eine unidirektionale Verbindung mit dem Steuergerät 3 verbunden, d.h. die Sensoren 1, 2 und 4 senden jeweils ihre Daten zum Steuergerät, das diese dann auswertet. Das Steuergerät 3 sendet jedoch keine Daten zu den Sensoren 1, 2 und 4. Dafür legt das Steuergerät 3 auf die Leitungen jeweils einen Gleichstrom, aus dem die Sensoren 1, 2 und 4 jeweils ihre Energie beziehen. Durch Strommodulationen, beispielsweise Amplituden oder Pulsweitenmodulationen, werden dann die Sensorwerte auf diesen Gleichstrom moduliert. Alternativ ist es möglich, eine bidirektionale Verbindung jeweils zu verwenden oder einen Bus, an dem die Sensoren angeschlossen sind.

Figur 2 zeigt in einem Blockschaltbild das erfindungsgemäße Verfahren für die Auswertung von Drucksignalen. Das Drucksignal P wird in einen Tiefpassfilter 201 gegeben, da die crashrelevanten Daten im Drucksignal sich im tieffrequenten Anteil des Signals befinden. Daher wird in diesem ersten Schritte eine Tiefpassfilterung bis etwa 400 Hz durchgeführt. Der Tiefpass ist dabei vorzugsweise ein Tiefpass dritter Ordnung, um die entsprechende Genauigkeit zu erzielen. Da in diesem Algorithmus oder Verfahren erste und zweite Ableitungen verwendet werden, ist eine Tiefpassfilterung unabdingbar, um die Empfindlichkeit der Ableitung auf die zeitliche Skalierung der interessierenden Signaleigenschaften abzustimmen.

Das Signal des Tiefpassfilters 201 geht dann an einen Empfindlichkeitsblock 202, einen Schwellwertvergleicher für das gefilterte Drucksignal 203, einen weiteren Schwellwertvergleicher 204, der die zeitliche Ableitung des Druckes mit einer Schwelle vergleicht, und einen dritten Schwellwertvergleicher 205, der die zweite Ableitung des Druckes multipliziert mit der ersten Ableitung des Druckes mit einer weiteren Schwelle vergleicht. Die Blöcke 204 und 205 weisen jeweils Differenziererfunktionen auf, um eine zeitliche Ableitung des Druckes bzw. eine zweite zeitliche Ableitung des Druckes, durchzuführen. Die Blöcke 202 bis 205 weisen zeitabhängige Schwellen auf, mit denen die Signale verglichen werden. Die Schwellen ändern sich in Abhängigkeit von den Signalen selbst. Dabei wird berücksichtigt, dass bestimmte physikalische Gegebenheiten bei einem bestimmten Signalverhalten berücksichtigt werden müssen, um Fehlauslösungen zu vermeiden. Im Empfindlichkeitsblock 202 muss das Drucksignal P eine zeitabhängige Schwelle überschritten haben, damit die Blöcke 203 bis 205 aktiv werden. Die verwendeten zeitabhängigen Schwellen steigen nach Start des Algorithmus an und können im späteren Verlauf auch wieder geringer werden. Dies ist sinnvoll, da besonders bei Crashes, die zuerst nicht die Tür treffen und bei langsamen Crashes die Türdeformation etwas länger dauert und somit das Signal aufgrund der immer vorhandenen Türundichtigkeit nicht die der Volumenänderung entsprechende Druckänderung erreicht.

Im Block 203 ist eine einfache, zeitabhängige Schwelle auf das Drucksignal selbst angewendet und dient u.a. zur Auslösung von schnellen Crashes mit einem harten Gegner und auch bei schrägen Crashes, bei denen die Tür erst spät getroffen wird und eine Airbagauslösung zwar nicht unbedingt erforderlich ist, aber meist erwartet ist, da das Automobil sehr start beschädigt sein kann. Im Allgemeinen kann es dabei zu einem Totalschaden führen.

Im Block 204 wird zunächst das Drucksignal, das gefiltert wurde, einmal nach der Zeit differenziert. Damit liegt dann die Druckänderung, also ein Gradient vor. Im Block 204 wird dann auf diese Druckänderung eine weitere zeitabhängige Schwelle angewendet, die sich in Abhängigkeit von der Druckänderung auch wieder ändert. Damit werden vor allem schnelle Pfahlcrashes erkannt, also Crashes mit Objekten, die relativ ungehindert nur lokal in das Fahrzeug eindringen.

Im Block 205 ist eine zeitabhängige Schwelle auf das Produkt aus erster und einer verzögerten zweiten Ableitung des Drucksignals, die beide größer als Null sein müssen, vorgesehen. Dazu weist der Block 205 entsprechende Funktionen zur einmaligen und zweimaligen zeitlichen Diffenzierung des Drucksignals auf. Hier soll eine große positive Krümmung gefolgt von einem starken Anstieg detektiert werden. Ein solcher Signalverlauf tritt auf, wenn das eindringende Objekt auf steifere Strukturen trifft, beispielsweise die B-Säule oder ein Versteifungsrohr und dadurch die Intrusion abgebremst wird. Wenn die entsprechende Struktur dann nachgibt, dringt das Objekt umso schneller ein. Dieser Effekt kann auch durch die Deformation des eindringenden Objekts weiche Barriere, Fahrzeug, verursacht werden. Bei Fehlauslösungen, beispielsweise durch einen Fußball, einen Fußtritt oder ein Fahrrad, treten solche Effekte weit weniger auf, so dass dadurch ein sehr gutes Kriterium zur Trennung von kritischen Fehlauslösungen und zum Beispiel langsamen Pfahlcrashes und weichen Barrierencrashes gegeben ist. Die Trennung von Fehlauslösungen und Auslösecrashes muss über den Algorithmus erfolgen, da auch Plausibilitätssensoren, wie der Sensor 4, bei den genannten Fehlauslösungen freigeben würden.

Durch die Kombination des Tiefpassfilters 201 und der einfachen bzw. zweifachen Anwendung eines Ableitungsoperators im Block 205 entstehen Waveletfilterungen mit ein bzw. zwei verschwindenden Momenten. Grob gesprochen detektiert ein Wavelet mit einem verschwindenden Moment Änderungen des Signals mit einer bestimmten Skalierung, während ein Wavelet mit zwei verschwindenden Momenten eher Krümmungen des Signales detektiert.

Der Block 202 ist an ein UND-Gatter 207 angeschlossen, während die Blöcke 203 bis 205 an ein ODER-Gatter 206 angeschlossen sind. Der Ausgang des ODER-Gatters 206 ist dann an einen zweiten Eingang des UND-Gatters 207 angeschlossen. D.h. nur, wenn die Empfindlichkeit 202 bei ihrem Schwellwertvergleich erkannt hat, dass das Drucksignal über der ersten Schwelle ist und wenigstens einer der Blöcke 203 bis 205 eine Schwellwertüberschreitung erkannt hat, dann liegt am Ausgang des UND-Gatters 207 eine logische 1 vor und es wird im Block 208 die Auslöseentscheidung getroffen, wobei das Signal des Plausibilitätssensors mit einbezogen wird.

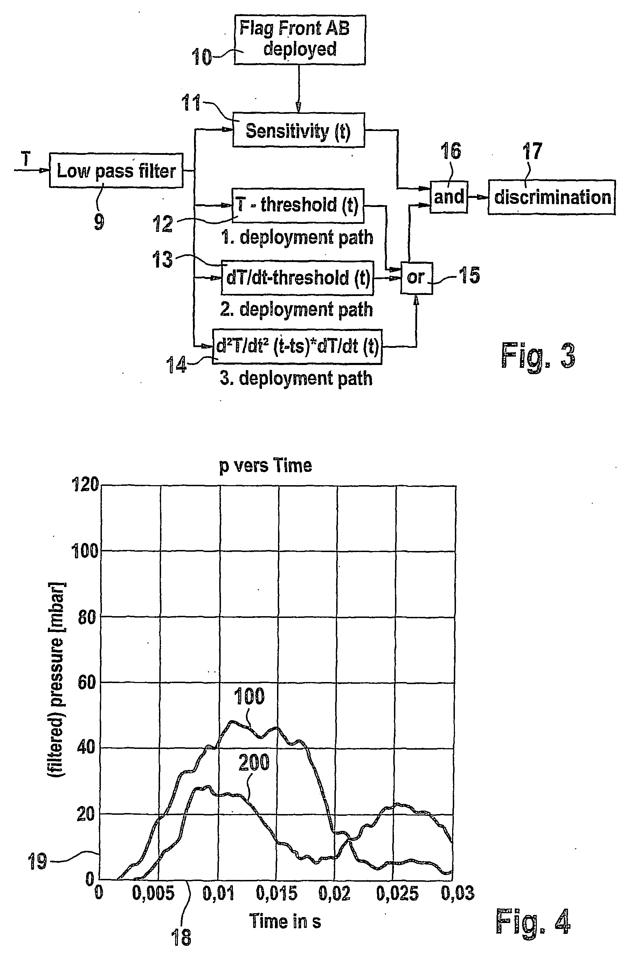

In Figur 3 ist ein zweites Blockschaltbild dargestellt. Hier wird das erfindungsgemäße Verfahren für einen Temperatursensor dargestellt. Das Temperatursignal T wird auf einen Tiefpassfilter 9 aus den oben genannten Gründen gegeben. Auch hier befinden sich die crashrelevanten Daten im tieffrequenten Anteil, so dass auch hier eine Tiefpassfilterung bei ca. 400 Hz durchgeführt wird. Das Gleiche gilt für die Tiefpassfilterung, da auch hier die erste und zweite Ableitung zur Erkennung eines Aufpralls verwendet werden. Das gefilterte Signal wird dann vom Ausgang des Tiefpassfilters 9 an die Blöcke 11 bis 14 abgegeben. Im Block 11 wird die Empfindlichkeit des erfindungsgemäßen Verfahrens festgelegt. Im Block 12 wird die Temperatur mit einer zeitabhängigen Schwelle verglichen. Auch diese Schwelle ändert sich in Abhängigkeit vom aktuellen Temperatursignal. Im Block 13 wird wiederum die Ableitung der Temperatur mit einer weiteren Schwelle, die auch zeitabhängig ist, verglichen. Im Block 14 wird analog zur Druckauswertung ein Produkt aus der ersten Ableitung der Temperatur mit der zweiten Ableitung der Temperatur, die etwas zeitversetzt ist, gebildet. Die Blöcke 12, 13 und 14 sind an Dateneingänge eines ODER-Gatters 15 angeschlossen. Der Ausgang des ODER-Gatters 15 führt an einen ersten Dateneingang eines UND-Gatters 16, an dessen zweiten Dateneingang der Empfindlichkeitsblock 11 angeschlossen ist. Im Block 17 findet dann die Plausibilisierung und Aufprallerkennung statt. Der Empfindlichkeitsblock 11 erhält weiterhin ein Signal vom Frontairbag 10.

Erkennt die Empfindlichkeit 11, dass das Signal eine Schwelle überschritten hat, und zwar dem Betrage nach, also in positiver oder negativer Richtung, dann starten die Blöcke 12 bis 14 ihre Vergleiche. Dass diese Vergleiche beginnen, wenn eine negative Schwelle unterschritten wird, hängt daran, dass dies nur beim Türzuschlagen passieren kann, da sich dann die Innenverkleidung der Tür auf Grund ihrer Trägheit von der Tür leicht abhebt, so dass ein Unterdruck, also eine Abkühlung, im Türinnenteil entsteht. Das Rückschwingen resultiert in einem Druckanstieg, also einer Erwärmung. Diese Erwärmung lässt sich leichter ausblenden, wenn sie etwas später nach dem Startalgorithmus stattfindet, da dann im allgemeinen die Schwellen unempfindlicher eingestellt sind.

Im Block 11 wird also die Empfindlichkeit des Algorithmus bestimmt, wobei die Temperatur eine zeitabhängige Schwelle überschritten haben muss, damit die anderen drei Blöcke 12 bis 14 aktiv werden. Diese zeitabhängige Schwelle wird von einem zusätzlichen Parameter 10 beeinflusst, und zwar dem Flag, ob eine Frontairbagauslösung erfolgt ist. In diesem Fall entsteht eine Druckwelle, die eine Komprimierung des Türvolumens und somit eine Temperaturerhöhung bewirkt, die vom Temperatursensor registriert wird. Dadurch wird das System empfindlicher für eventuelle Seitenanpralle. Um auch im Fall einer folgenden Seitenkollision richtig auszulösen, wird die zeitabhängige Schwelle im Block 11 für die Dauer der Druckwelle entsprechend angehoben.

Die verwendeten zeitabhängigen Schwellen steigen nach Start des Algorithmus an und können im späteren Verlauf auch wieder geringer werden. Dies ist sinnvoll, da besonders bei Crashes, die zuerst nicht die Tür treffen und bei langsamen Crashes die Türdeformation etwas länger dauert und somit das Signal aufgrund der immer vorhandenen Türundichtigkeit nicht die erwartete Temperaturänderung erreicht.

Im Block 11 ist eine einfache zeitabhängige Schwelle auf das Temperatursignal selbst angewendet worden und dient u.a. zur Auslösung von schnellen Crashes mit einem harten Gegner und auch bei schrägen Crashes, bei denen die Tür erst sehr spät getroffen wird und eine Airbagauslösung zwar nicht unbedingt erforderlich ist, aber meist erwartet wird, da das Auto sehr stark beschädigt ist, im allgemeinen ein Totalschaden.

Im Block 13 wird eine zeitabhängige Schwelle auf die Temperaturänderung angewendet. Dieser Pfad dient vor allem zum Auslösen von schnellen Pfahlcrashes, also Crashes mit Objekten, die relativ ungehindert nur lokal in das Fahrzeug eindringen.

Der nächste Block 14 ist eine zeitabhängige Schwelle auf das Produkt aus erster und verzögerter zweiter Ableitung, die beide größer als Null sein müssen. Ziel dieses Blocks 14 ist es, eine große positive Krümmung, gefolgt von einem starken Anstieg zu detektierten. Durch die Kombination des Tiefpassfilters und der einfachen bzw. zweifachen Anwendung eines Ableitungsoperators entstehen Waveletfilterungen mit ein bzw. zwei verschwindenden Momenten. Grob gesprochen detektiert ein Wavelet mit einem verschwindenden Moment Änderungen des Signals mit einer bestimmten Skalierung, während ein Wavelet mit zwei verschwindenden Momenten eher Krümmungen des Signales detektiert. Ein solcher Signalverlauf tritt auf, wenn das eindringende Objekt auf steife Strukturen trifft, beispielsweise die B-Säule oder das Versteifungsrohr. Dadurch wird die Intrusion etwas abgebremst. Wenn die entsprechende Struktur dann nachgibt, dringt das Objekt umso schneller ein. Dieser Effekt kann auch durch die Deformation des eindringenden Objekts weiche Barriere Verursacht werden. Bei Fehlauslösung Fußball, Fußtritt oder Fahrrad treten solche Effekte weit weniger auf, so dass damit ein sehr gutes Kriterium zur Trennung von kritischen Missuses, also Fehlauslösungen, zum Beispiel langsamen Pfahlcrashes und weichen Barrierencrashes gegeben ist. Die Trennung von Fehlauslösung und Auslösecrashes muss über den Algorithmus erfolgen, da auch Plausibilitätssensoren bei den genannten Fehlauslösungen freigeben würden. Die Blöcke 12 bis 14 können also unabhängig voneinander eine Auslöseentscheidung treffen, die dann mit Plausibilitätssignalen von anderen im Auto verbauten Sensoren bestätigt werden muss, um so zur endgültigen Entscheidung zu gelangen. Zeigt also wenigstens einer der Blöcke 12 bis 14 einen Aufprall an, dann gibt das ODER-Gatter 15 eine logische 1 an das UND-Gatter 15 ab, wobei dann auch der Empfindlichkeitsblock 11 eine logische 1 abgibt, da ja nur dann die Blöcke 12 bis 14 tätig werden können. In diesem Fall gibt das UND-Gatter 16 dann an den Block 17 eine logische 1 ab, so dass dann Block 17 diese Aufprallerkennung in Abhängigkeit von den Plausibilitätssignalen des Sensors 4 zur Auslösung der Rückhaltemittel 5 führt.

In Figur 4 ist in einen Diagramm die Abhängigkeit des Druckes in einem Seitenteil von der Zeit dargestellt. Auf der Abszisse 18 ist die Zeit abgetragen und auf der Ordinate 19 der Druck. Die Kurve 100 ist der Druckverlauf bei einem 25 km/h-Fahrradaufprall und die Kurve 2 bei einem 20 km/h-Pfahlaufprall in die Nähe der B-Säule. Nur mit Hilfe von dem Block 14 bzw. 5 ist es möglich, diese beiden Fälle korrekt zu klassifizieren und rechtzeitig eine Auslöseentscheidung zu treffen.

## Patentansprüche

1. Verfahren zur Erkennung eines Aufpralls, wobei der Aufprall in Abhängigkeit von wenigstens einem Druck- oder Temperatursignal (P, T), das eine adiabatische Zustandsänderung in einem Fahrzeugteil repräsentiert, erkannt wird, wobei das wenigstens eine Druck- oder Temperatursignal (P, T) mit wenigstens einer ersten Schwelle einem ersten Vergleich unterzogen wird, **dadurch gekennzeichnet, dass** das wenigstens eine Druck- oder Temperatursignal (B, T) einer Tiefpassfilterung (201, 9) vor dem ersten Vergleich unterzogen wird, und dass der Aufprall in Abhängigkeit von dem ersten Vergleich und wenigstens einem zweiten Vergleich einer von dem wenigstens einen Druck- oder Temperatursignal abgeleiteten Größe mit wenigstens einer zweiten Schwelle erkannt wird und dass der erste Vergleich dazu verwendet wird, die Empfindlichkeit des Verfahrens einzustellen, indem nur nach Überschreiten eines Betrags der ersten Schwelle der wenigstens eine zweite Vergleich durchgeführt wird.

2. Verfahren nach Anspruch 1, **dadurch gekennzeichnet, dass** die erste und/oder die zweite Schwelle im zeitlichen Verlauf angepasst werden.

3. Verfahren nach Anspruch 1 oder 2, **dadurch gekennzeichnet, dass** als die wenigstens eine große zeitliche Ableitung des wenigstens einen Druck- oder Temperatursignal (P, T) verwendet wird.

4. Verfahren nach Anspruch 3, **dadurch gekennzeichnet, dass** der zweite Vergleich zu einer Überprüfung eines Produkts aus der ersten und zweiten zeitlichen Ableitung durchgeführt wird.

5. Verfahren nach einem der vorhergehenden Ansprüche, **dadurch gekennzeichnet, dass** das Verfahren zur Erkennung eines Seitenaufpralls verwendet wird.

6. Verfahren nach Anspruch 4, **dadurch gekennzeichnet, dass** in Abhängigkeit eines Frontaufpralls die erste Schwelle verändert wird.

7. Verfahren nach einem der Ansprüche 1 bis 5, **dadurch gekennzeichnet, dass** die wenigstens eine zweite Schwelle zunächst angehoben wird und dann wieder abgesenkt wird.

8. Verfahren nach einem der vorhergehenden Ansprüche, **dadurch gekennzeichnet, dass** in Abhängigkeit von der Erkennung des Aufpralls mit wenigstens einem Plausibilitätssignal eine Auslöseentscheidung für Rückhaltemittel getroffen wird.

9. Verwendung eines Steuergeräts in einem Verfahren nach einem der Ansprüche 1 bis 7.

## Claims

1. Method for detecting an impact, the impact being detected as a function of at least one pressure signal or temperature signal (P, T) which represents an adiabatic change in state in a vehicle part, the at least one pressure signal or temperature signal (P, T) with at least a first threshold being subjected to a first comparison, **characterized in that** the at least one pressure signal or temperature signal (B, T) is subjected to low-pass filtering (201, 9) before the first comparison, and **in that** the impact is detected as a function of the first comparison and at least a second comparison of a variable which is derived from the at least one pressure signal or temperature signal and which has at least a second threshold, and **in that** the first comparison is used to set the sensitivity of the method **in that** the at least one second comparison is carried out only after an absolute value of the first threshold has been exceeded.

2. Method according to Claim 1, **characterized in that** the first and/or the second thresholds are adapted over the course of time.

3. Method according to Claim 1 or 2, **characterized in that** a large time derivative of the at least one pressure signal or temperature signal (P, T) is used as the.

4. Method according to Claim 3, **characterized in that** the second comparison is carried out to check a product of the first and second time derivatives.

5. Method according to one of the preceding claims, **characterized in that** the method is used to detect a side impact.

6. Method according to Claim 4, **characterized in that** the first threshold is changed as a function of a frontal impact.

7. Method according to one of Claims 1 to 5, **characterized in that** the at least one second threshold is firstly raised and then lowered again.

8. Method according to one of the preceding claims, **characterized in that** a triggering decision for restraining means is taken as a function of the detection of the impact using at least one plausibility signal.

9. Use of a control unit in a method according to one of Claims 1 to 7.

## Revendications

1. Procédé de détection d'un impact, selon lequel on détecte l'impact en fonction d'au moins un signal de pression ou de température (P, T) qui représente un changement adiabatique d'état dans une partie de véhicule, le signal de pression ou de température (P, T) étant soumis à une première comparaison avec au moins un premier seuil,
**caractérisé en ce que**
le signal de pression ou de température (B, T) est soumis à une filtration passe-bas (201, 9) avant une première comparaison et on reconnaît l'impact en fonction de la première comparaison et d'au moins une deuxième comparaison d'une grandeur dérivée du signal de pression ou de température avec au moins un deuxième seuil, et on utilise la première comparaison pour régler la sensibilité du procédé, du fait que la deuxième comparaison est effectuée seulement après dépassement d'un montant du premier seuil.

2. Procédé selon la revendication 1,
**caractérisé en ce qu'**
on adapte le premier et/ou le deuxième seuil en fonction de la courbe dans le temps.

3. Procédé selon la revendication 1 ou 2,
**caractérisé en ce que**
comme courbe on utilise une grande dérivation en fonction du temps du signal de pression ou de température (P, T).

4. Procédé selon la revendication 3,
**caractérisé en ce que**
la deuxième comparaison est utilisée pour une vérification de la première et de la deuxième dérivation en fonction du temps.

5. Procédé selon l'une des revendications précédentes,
**caractérisé en ce que**
le procédé est utilisé pour la détection d'un impact latéral.

6. Procédé selon la revendication 4,
**caractérisé en ce que**
le premier seuil est modifié en fonction d'un impact frontal.

7. Procédé selon l'une des revendications 1 à 5,
**caractérisé en ce que**
le deuxième seuil est tout d'abord relevé, puis rabaissé.

8. Procédé selon l'une des revendications précédentes,
**caractérisé en ce qu'**
une décision de déclenchement d'un moyen de retenue est prise en fonction de la détection de l'impact avec au moins un signal de plausibilité.

9. Utilisation d'un appareil de commande dans un procédé selon l'une des revendications 1 à 7.
